# EUROPEAN PATENT SPECIFICATION

(11) **EP 3 733 033 B1**
(45) Date of publication and mention of the grant of the patent: **01.12.2021**
(21) Application number: 19172039.0
(22) Date of filing: 30.04.2019
(51) Int. Cl.: A47J 43/08

(54) **LID DEVICE HAVING A GEAR BOX FOR A FOOD PROCESSOR**
DECKELVORRICHTUNG MIT EINEM GETRIEBE FÜR EINE LEBENSMITTELVERARBEITUNGSVORRICHTUNG
DISPOSITIF DE COUVERCLE DOTÉ D'UN SYSTEME D'ENGRENAGES POUR PROCESSEUR ALIMENTAIRE

(43) Date of publication of application: 04.11.2020
(73) Proprietor: Senur Elektrik Motorlari San. Ve Tic. A.S., 34310 Istanbul (TR)
(72) Inventor: ULUKAN, Yasemin, 34310 Istanbul (TR); GÜZELTEPE, Fahrettin, 34310 Istanbul (TR); GÜLSOY, Ishak, 34310 Istanbul (TR)
(74) Representative: Sevinç, Erkan

(56) References cited:
- WO-A1-2013/097702
- CN-A- 105 816 071
- CN-U- 203 597 838

## Description

### Technical Field of the Invention

The present invention relates to a lid device for a food processor for processing supplied food and more particularly to a food processor that is driven by the motor in a hand held blender or a stick mixer.

### Background of the Invention

Food processors are well known. In food processors working with the motor in the drive unit, the food stuff to be fed from a feed tube of a lid to a container is processed by an operation of slicing, chopping, cutting, dicing, crushing or grating by the motor of the drive unit by driving a rotatable drive shaft in the container.

Such drive units generally comprise a handle that houses a motor and that is mechanically coupled to a stem that features a blade at one end and coupling for the motor at the other end. Because the handle and the stem of the drive unit can be separated the handle portion can be used to drive the rotating blade of a food processor. However, the motor output speed of the drive unit is high and a standard food processor blade requires only about 1500-2500 rpm, a speed reducing gear box is required between the internal electric motor of the drive unit and the mechanical input of the food processor.

In the drive unit, the motor shaft revolution can be about 14000 rpm -18000 rpm. However, a maximum of 2000 rpm cycle is required for slicing, chopping, cutting, dicing, crushing or grating operations in the container of the food processor which is obtained by a gear mechanism which provides a reduction between the internal electric motor of the drive unit and the drive shaft in the container. Since the lid of a lid device containing such a gear mechanism having a plurality of reduction gears makes it impossible to wash and clean. It is strictly not recommended to wash or immerse the lid of the lid device of the food processor with such a reduction gear mechanism, as this causes malfunction if the fluid enters the reduction gear mechanism.

However, as a result of the process of cutting, chopping, grilling, mixing in the container, the inner surface of the lid becomes particularly dirty and such inner surfaces need to be washed. Since it may be very dangerous for the user to use the drive shaft together with the gearbox directly on the drive unit (such as a blender or a stick mixer) and this is prohibited by the standards, it is necessary to place a lid that covers the container and only operate the drive unit when the lid is on the container. In the state of the art, in most of the products on the market, the reduction gear mechanism is placed in the lid positioned on the container and instructions are given to avoid washing the lid.

As a result of washing the lid having an integrated the reduction gear mechanism, water may leak from the inter-cavity spaces to reduction gear mechanism which causes rusting of the parts inside, reducing their lubricity and deterioration of the gears. In some complex systems, bi-directional couplings that is arranged on the lid having a plurality of parts are used. In such systems, it is not easy to clean the food residues that escaped between the couplings. Moreover, even if two different couplings are used, it is possible for the reduction gear mechanism to be placed directly on the drive shaft without the lid and to operate the food processor, which poses a great danger for the user.

WO 2013/097702 is the prior art closest to the invention and discloses the preamble of claim 1.

### Objects of the Invention

Primary object of the present invention is to overcome the abovementioned shortcomings of the prior art.

Another object of the present invention is to provide a lid device in which a gearbox can be easily removed from the lid. With this improvement, said lid can be washed under water when it is dirty, and since it is a system that closes the coupling connections when the gear box is removed from the lid, it will not be possible to use the drive unit without the lid placed onto the container.

Another object of the present invention is to provide a lid device with an enhanced security since the food processor can be used only when the lid device is placed onto the container. Thus, the food stuff will be only processed if the lid is placed, the gear box is fitted to the lid, and the drive shaft is attached in the gearbox.

Another object of the present invention is to provide a lid device which can be easily cleaned. When it is desired to clean the lid device, the gear box is removed from the lid and the lid is easily cleaned in water or in the dishwasher.

### Summary of the Invention

The present invention proposes a lid device having a lid and a gear box, for use with a container of a food processor having a drive shaft in the container and a drive unit as a separate unit, said drive unit having an internal electric motor and a rotating output in the form of a first coupling, wherein the lid device comprises: a gear box housing provided on the lid with an opening for reaching the drive shaft; and the gearbox being a separate component that is removeably received by the gear box housing and having a second coupling in which the drive shaft can be attached. Said gear box comprises a retractable blockage means that is adapted to close said opening wherein said gear box housing has a triggering means that is arranged to retract said blockage means to open said opening when the gear box is mounted to the gear box housing of the lid.

### Brief Description of the Figures

The figures, whose brief explanations are herewith provided, are solely intended for providing a better understanding of the present invention and are as such not intended to define the scope of protection or the context in which said scope is to be interpreted in the absence of the description.
Figure 1 depicts an exploded view of a lid device for a food processor according to the present invention.

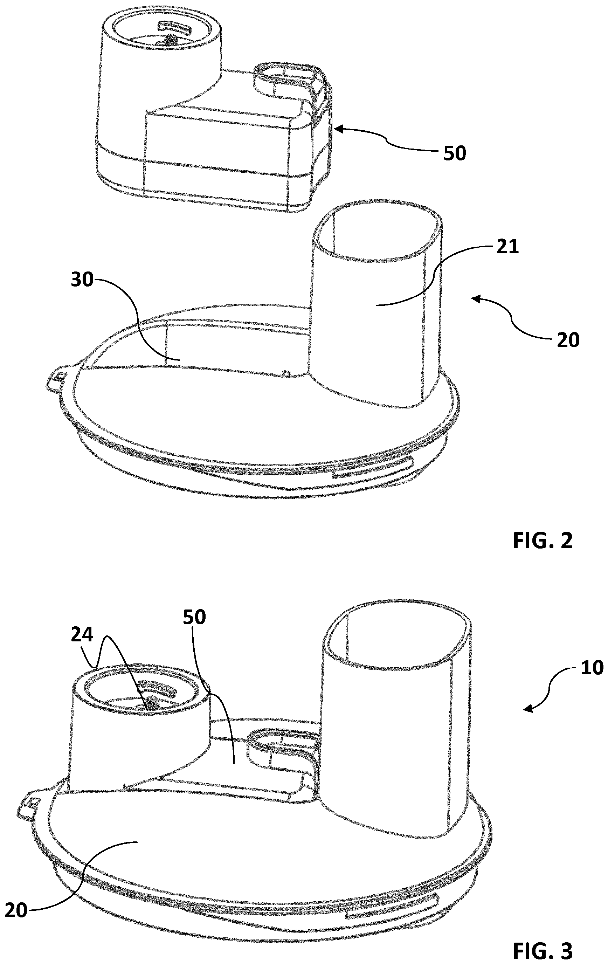

Figure 2 shows a separate perspective view of a lid and a gear box of the lid device according to the present invention.
Figure 3 depicts a perspective view of the lid device according to the present invention.
Figure 4 depicts a cross-sectional view of the lid device shown in figure 3 where the blockage means is in a closed position, according to the present invention.
Figure 5 depicts a cross-sectional view of the lid device shown in figure 3 where the blockage means is in an opened position, according to the present invention.
Figure 6 depicts an exploded view of a food processor in which the lid device is used according to the present invention.
Figure 7 depicts a cross-sectional view of the food processor where the blockage means is in the opened position and the drive shaft is attached, according to the present invention.
Figure 8A, 8B and 8C depict different perspective views of an intermediate part of the lid device according to the present invention.
Figure 9a depicts a top perspective of the lid according to the present invention.

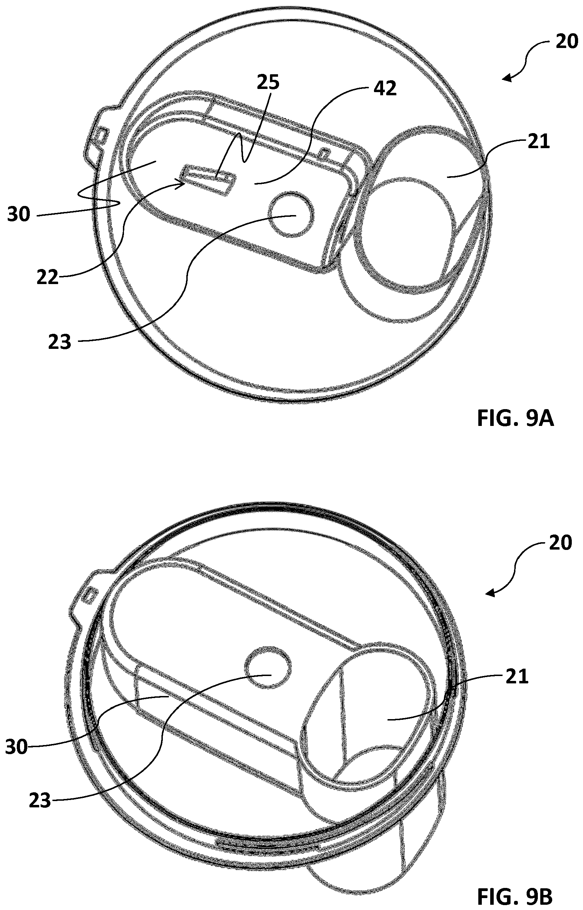

Figure 9a depicts a rear perspective of the lid according to the present invention.

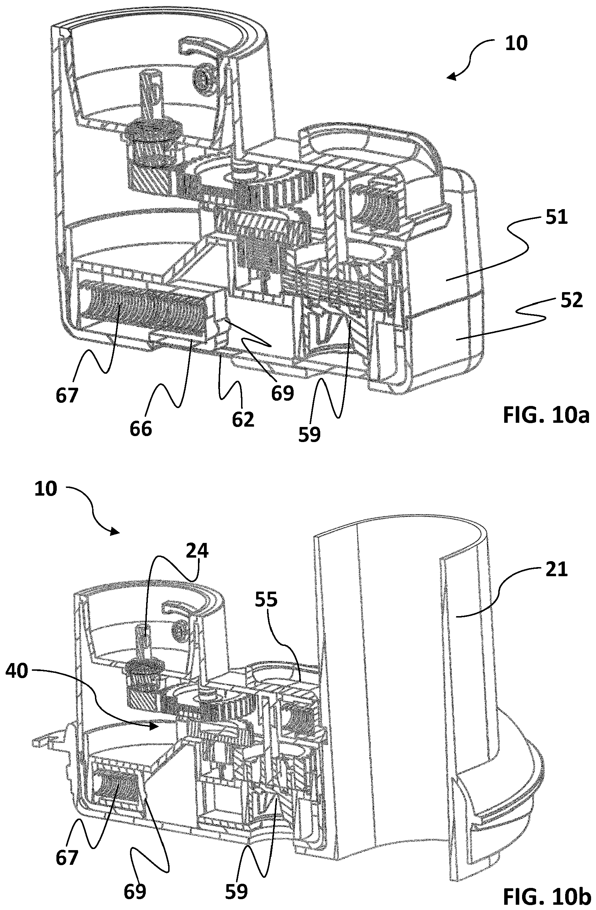

Figure 10a depicts a partially broken away perspective view of the lid device where the blockage means is in the closed position, according to the present invention.
Figure 10b depicts a partially broken away perspective view of the lid device where the blockage means is in the opened position, according to the present invention.

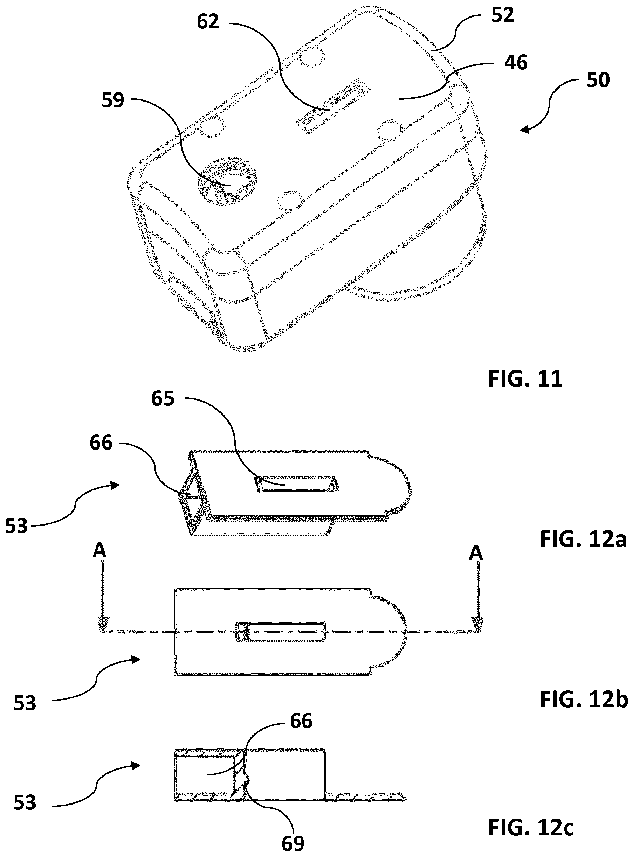

Figure 11 depicts a rear perspective of the gear box according to the present invention.
Figure 12A depicts a perspective view of the blockage means of the lid device according to the present invention.
Figure 12B depicts a rear view of the blockage means of the lid device according to the present invention.
Figure 12C depicts a cross-sectional view of the blockage means of the lid device taken along A-A shown in figure 12b, according to the present invention.

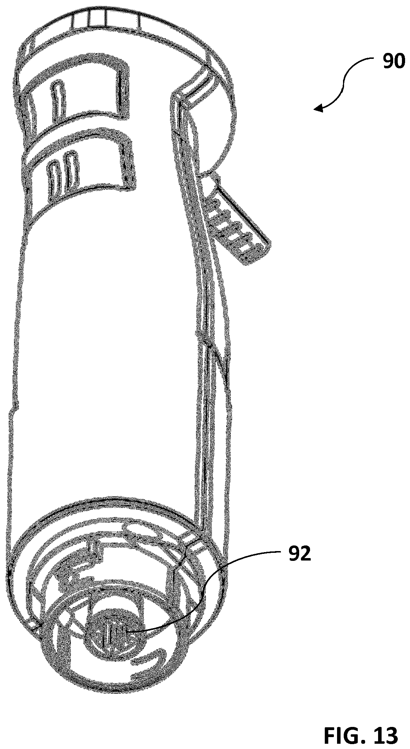

Figure 13 depicts a drive unit to be used with the lid device according to the present invention.

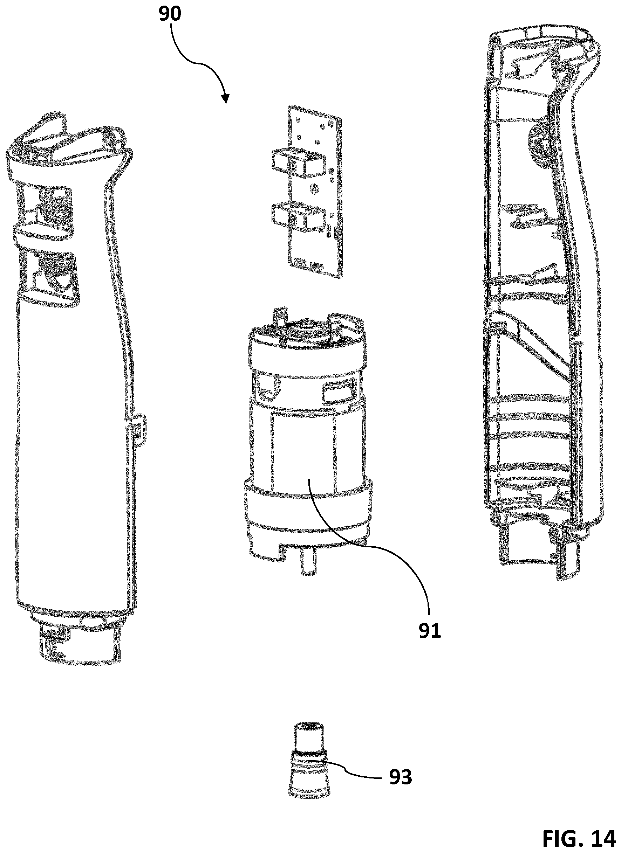

Figure 14 depicts an exploded view of the drive unit shown in figure 13.

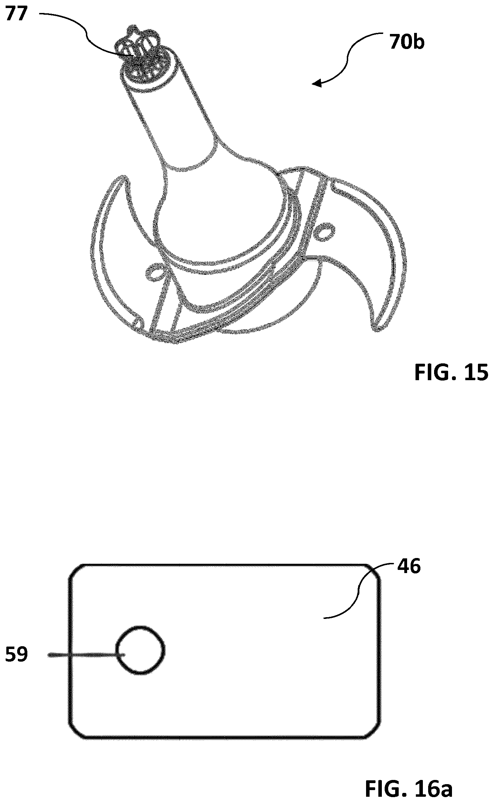

Figure 15 depicts an another embodiment of a drive shaft having blades to be used with the lid device according to the present invention.
Figure 16a depicts a bottom surface of the gear box and a second coupling thereof according to the present invention.

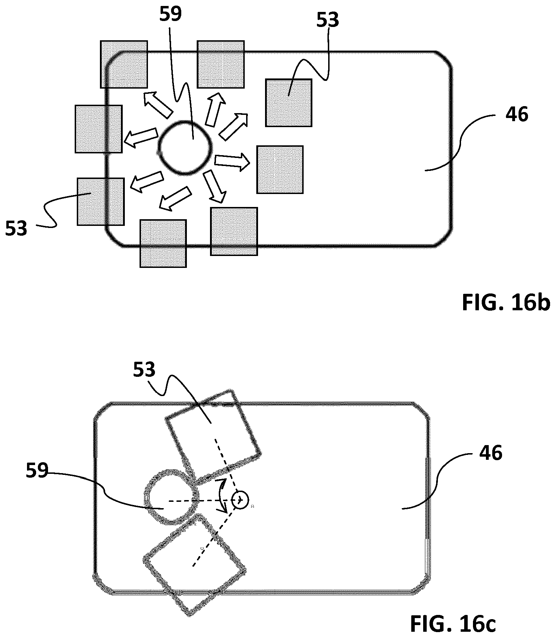

Figure 16b depicts the alternative movements of the blockage means in the bottom surface of the gear box shown in figure 16a wherein the blockage means is arranged to move around the second coupling, said movement can be vertical, horizontal or a transverse movement with respect to the second coupling, according to the present invention.
Figure 16c depicts the alternative movements of the blockage means in the bottom surface of the gear box shown in figure 16a wherein the blockage means is arranged to make rotational movement from a pivot point according to the present invention.

### Detailed Description of the Invention

Referring now the figures outlined above, according to the present invention, a lid device (10) for a food processor (100) is proposed. Said lid device (10) of the food processor (100) is arranged to mechanically process a food stuff, for example by an operation of slicing, chopping, cutting, dicing, crushing or grating. According to the present invention, the food processor (100) generally comprises a container (60) for storing a food stuff (not shown) that has been mechanically processed; the lid device (10); the gear box (50) that is attachable to the gear box (50) and a rotatable drive shaft (70a, 70b) for applying a mechanical process to a food stuff. A hand held blender or a stick mixer, acting as a drive unit (90), is releasably mounted to the lid device (20) to drive the drive shaft (70a, 70b).

The present invention proposes the lid device (10) having the lid (20) and the gear box (50), for use with the container (60) of the food processor (100) having the drive shaft (70a, 70b) in the container (60) and the drive unit (90) as a separate unit, said drive unit (90) having an internal electric motor (91) and a rotating output in the form of a first coupling (92), wherein the lid device (10) comprises: a gear box housing (30) provided on the lid (20) with an opening (23) to reach the drive shaft (70a, 70b); and the gearbox (50) being a separate component that is removeably received by the gear box housing (30) and having a second coupling (59) in which the drive shaft (70a, 70b) can be attached. Said gear box (50) comprises a retractable blockage means (53) arranged to close said opening (23) wherein said gear box housing (30) has a triggering means (22) that is arranged to retract said blockage means (53) to open said opening (23) when the gear box (50) is mounted to the gear box housing (30) of the lid (20). Thus, said gear box (50) can be easily removed and the lid (20) can be easily washed under water when it is dirty, and since it is a system that closes the coupling connections when the gear box (50) is removed from the lid (20), it will not be possible to use the drive unit (90) without the lid (20) on the container (60). In the preferred embodiments, the gear box housing (30) is formed as a depressed portion which houses the gear box (50). In an alternative embodiment, the gear box housing (30) can be raised and formed as an elevated portion from the lid (20) in which the gear box (50) is placed.

Figure 16b depicts the alternative movements of the blockage means (53) in the bottom surface of the gear box (46) shown in figure 16a. The blockage means (53) can be arranged to move around the second coupling (59), said movement of the blockage means (53) can be a vertical, horizontal or transverse movement with respect to the second coupling (59). Furthermore, figure 16c depicts an alternative movement of the blockage means (53) in the bottom surface of the gear box (46) wherein the blockage means (46) can be arranged to make a rotational movement from a predetermined pivot point.

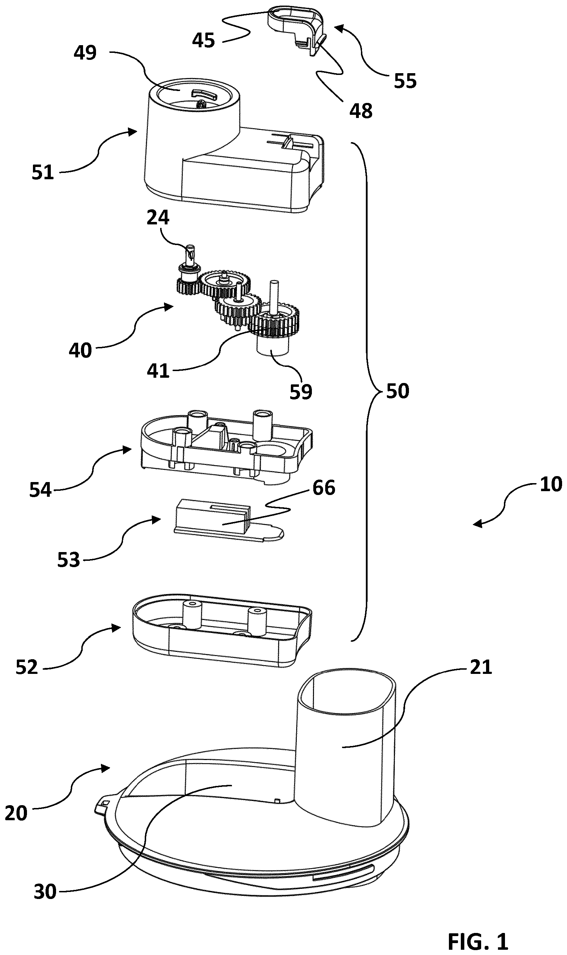

The gear box (50) comprises a reduction gear mechanism (40) having a plurality of gears (41) for providing desired reduction ratio. The internal electric motor (91) output speed of the drive unit (90) is high and a standard food processor blade requires only about 1500-2500 rpm, said speed reducing gear box (50) is used between the internal electric motor (91) of the drive unit (90) and the mechanical input of the food processor (100). Referring to the fig. 1, in one embodiment, the reduction gear mechanism (40) has four sets of reduction gears (41) for a rational increase in output torque. Said reduction gears (41) can have different stages reduction for providing variable reduction.

Referring to the figure 1, said gear box (50) can have an upper part (51) having a circumferential collar (49) in which the first coupling (92) of the drive unit (90) is attached to a connection portion (24) and a lower part (52) with a hollow channel (62) to interact with the blockage means (53) of the lid (20). The circumferential collar (49) is configured to cooperate with a lower part of the appropriate drive unit (90) wherein said drive unit (90) can be a hand held blender or a stick mixer. When the drive unit (90) is inserted into the circumferential collar (49), the connection portion (24) engages with the first coupling (92), for example can be arranged as female-male couplings. Said upper and lower parts (51, 52) are arranged to be coupled together to form the outer form of the gear box (50). In another embodiment the gear box (50) can be formed as a single part by eliminating two-part form.

Said gear box (50) has a connection portion (24) which is arranged to match with the rotating output in the form of a first coupling (92) of the drive unit (90) which is adapted to couple with the connection portion (24). As shown in Fig. 1, the connection portion (24) of the gear box (50) is formed as a protrusion and is arranged to match with a cavity in the first coupling (92) of the drive unit (90). Furthermore, the gear box (50) has a second coupling (59) in which an end of the drive unit (70) is received. The first coupling and the second coupling (92, 59) have different coupling configuration to eliminate wrong engagement.

Said gear box (50) further comprises an intermediate part (54) which is provided between said upper and lower parts (51, 52) wherein said intermediate part (54) can have a guiding portion (57) facing to the lower part (52) and a hole (56) at the end of said guiding portion (57) which is shaped and dimensioned with respect to the opening (23) in the gear box housing (30) in which the blockage means (53) is guided.

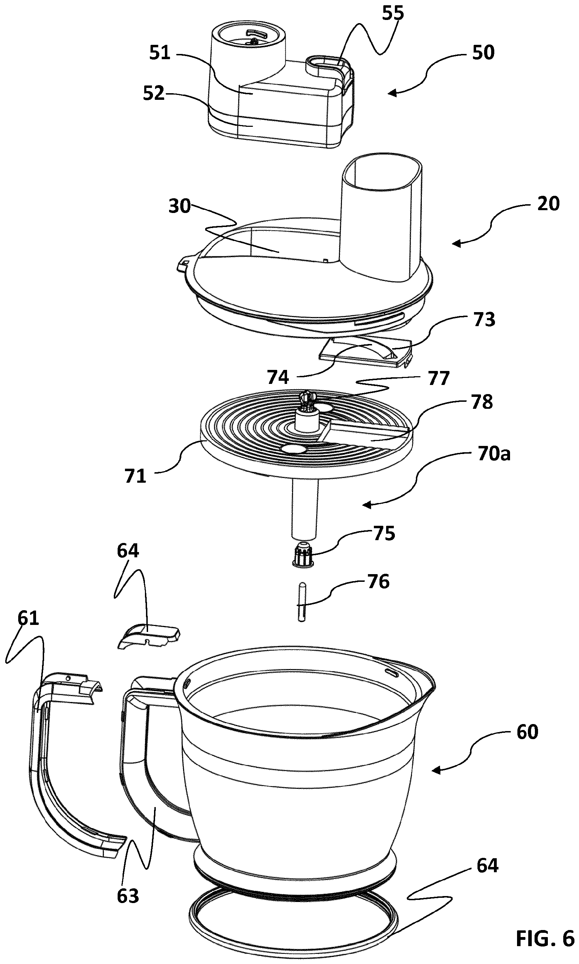

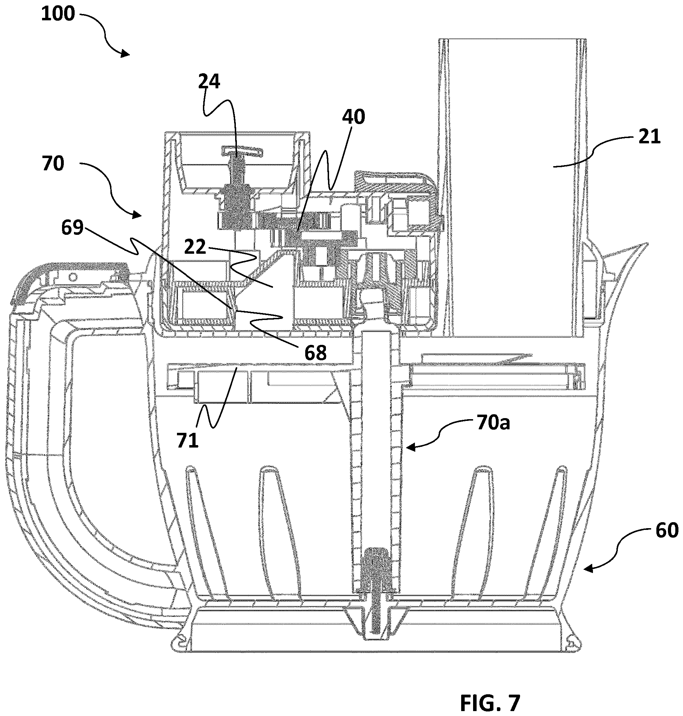

Referring to the Fig. 7, Said container (60) is generally provided with a handle (63) that extends from an outer surface of the container wall (21) so that a user is able to hold the container (60) and therefore the food processor (100). Referring to the figure 6, the handle (63) is covered by a handle cover (61) and is used with a handle upper part (64) for connection thereof. The container (60) can have a circumferentially-extending container wall which up stands from the base and an upper opening defined by an upper rim of the container wall. A processed food receiving space is defined in the container (20) to receive a processed food stuff example from a feed tube (21) of the lid (20). Said feed tube (21) is integral to the lid (20) and has a hollow space that is arranged to fed by the food for the container (60). Said feed tube (21) is formed through the lid (20) and extends from upper part of the lid (20). Therefore, the food stuff is able to be fed through the feed tube (21) formed in the lid (20) to the drive shaft (70a, 70b) disposed below the lid device.

Said drive unit (90), such as a hand-held blender or stick mixer, may have a handle section and a lower end. Referring to the figure 14 in which an exploded view of the drive unit (90) is shown. An internal electric motor (91) is disposed inside and a power cord can extend from an upper end of the housing to electrically communicate with a power supply unit (not shown) to supply power to the electric motor. In an alternative embodiment, said drive unit (90) can have a rechargeable battery for providing required electrical power. The internal electric motor (91) rotatably drives a drive member (93) of the first coupling (92) disposed at the lower end which is arranged to cooperate with the gear box (50). An operating button can be provided to operate the internal electric motor (91) and triggers the drive member (93) to rotate. Said connection portion (24) matches with the first coupling of the drive unit (90). When the drive unit (90) is attached to the lid device (10) and is rotated by the internal electric motor (91), a plurality of interconnected reduction gears (41) are rotated such that the drive shaft (70a, 70b) which is in contact via the second coupling (59) are also rotated to mechanically process the food stuff fed by the feed tube (21).

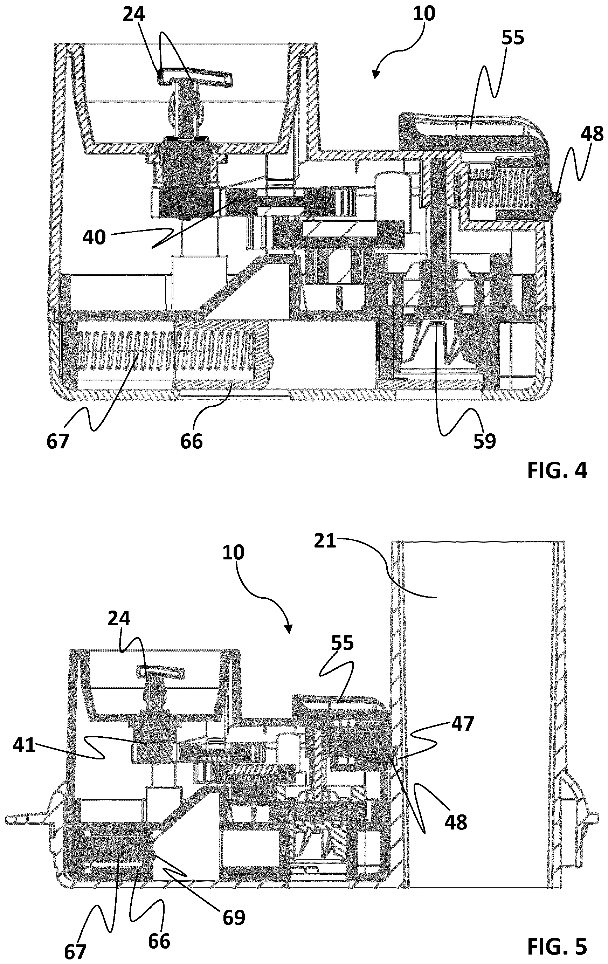

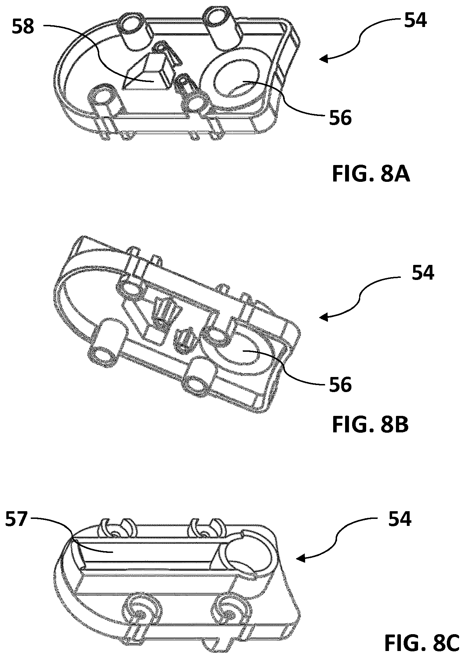

Referring now to the figure 4 and 5, the blockage means (53) can be a spring-biased member that is arranged to move on a bottom surface of the gear box housing (42). When the gear box (50) is mounted in the gear box housing (30), first the corresponding triggering means (22) passes through a hollow channel (62) formed on a lower part (52) of the gear box (50) and then reaches and slides the blockage means (53). When the gear box (50) is fully placed, the blockage means (53) is moved to an "open position" in its housing so that the opening (23) in the gear box housing (30) is opened. Referring to figures 8a-c, the intermediate part (54) is provided with a triggering means housing (58) which is shaped and dimensioned with respect to the triggering means (22). Said triggering means housing (58) can have a triangular cross-section. Furthermore the intermediate part (54) has an intermediate opening (56) in which the second coupling if the gear box (50) is placed

Said triggering means (22) can be formed as an integral protrusion which is arranged to pass through the hollow channel (62) of the gear box (50) and an engagement channel (65) of the blockage means (53) for retracting the blockage means (53). Referring now the Figures 12a-c, The blockage means (53) has a spring housing (66) in the form of semi-closed region in which a spring (67) is provided. An end of the spring (67) abuts an inner wall of the lower part (52) and the other end abuts the inner wall of the spring housing (66) wherein said spring (67) can be compresses. In alternative embodiments, said spring (67) is eliminated and said blockage means (53) can have an extended portion that acts a resilient means instead of said spring (67). Said extended portion can abut on an inner wall of the gear box (50) to be stretched. Furthermore, the spring (67) can be formed from a metal winding wire as a helical spring or a spiral spring.

The blockage means (53) has a blocking tip for closing said opening in the gear box housing (30) and an engagement channel (65) formed as a slit in which the triggering means (22) can pass. Said hollow channel (62) and the engagement channel (65) are shaped and dimensioned with respect to the triggering means (22). The triggering means (22) has a substantially triangle cross-section with an inclined wall (25) which is inclined with respect to a bottom surface of the gear box housing (30), said inclined wall being configured arranged to be in touch with a lower wall of the blockage means (53) when mounting (see fig. 10a). The triggering means (22) can also have a flat tip portion at the end of the inclined wall (25) which first enters the hollow channel (62) and the engagement channel (65).

Referring to the figure 1 and 5, the gear box (50) can have a connection member (55) as a separate part with an outwardly extending lip (48) which is shaped and dimensioned with respect to an engagement groove (47) formed on the feed tube of the lid (20). Said connection member (55) is used to attach the gear box (50) in its housing, and when the user wants to remove the gear box (50) in the gear box housing (30), the user presses an abutment portion (45) of the connection member (55) by moving the lip (48) from the corresponding engagement groove (47). The abutment portion (45) is protruded from the connection member (55) to be held by the user.

Referring to the Figs. 5 and 7, the blockage means (53) can have a bulge portion (69) which is arranged to match with a corresponding cavity (68) in the triggering means (22) when the gear box (50) is mounted to the gear box housing (30) of the lid (20) such that the gear box (50) is firmly kept in the gear box housing (30). Said bulge portion (69) is formed on an outer wall of the spring housing (66) facing to the second coupling (59).

Second coupling (59) formed on one of the reduction gears (41) has a female end that receives and couples to a drive shaft tip (77) of the drive shaft (70a, 70b). The dimensions and configuration of the drive shaft tip (77) are such that the tip cannot be engaged by or rotated by either the first coupling (92) of the drive unit (90). In the preferred embodiments, the first coupling (92) and the second coupling (59) are female coupling components for receiving the male output coupling components such as the connection portion (24) of the gear box (50) and the drive shaft tip (77).

### Part list:

- 10.: Lid device
- 20.: Lid
- 21.: Feed tube
- 22.: Triggering means
- 23.: Opening
- 24.: Connection portion
- 25.: Inclined wall
- 30.: Gear box housing
- 40.: Gear mechanism
- 41.: Reduction gears
- 42.: Bottom surface of the gear box housing
- 45.: Abutment portion
- 46.: Bottom surface of the gear box
- 47.: Engagement groove
- 48.: Lip
- 49.: Circumferential collar
- 50.: Gear box
- 51.: Upper part
- 52.: Lower part
- 53.: Blockage means
- 54.: Intermediate part
- 55.: Connection member
- 56.: Hole
- 57.: Guiding portion
- 58: Triggering means housing
- 59.: Second coupling
- 61.: Handle cover
- 62.: Hollow channel
- 63.: Handle
- 64.: Handle upper part
- 65.: Engagement channel
- 66.: Spring housing
- 67.: Spring
- 68.: Cavity
- 69.: Bulge portion
- 70a, 70b.: Drive shaft
- 77.: Drive shaft tip
- 90.: Drive unit
- 91.: Internal electric motor
- 92.: First coupling

## Claims

1. A lid device (10) having a lid (20) and a gear box (50), for use with a container (60) of a food processor (100) having a drive shaft (70a, 70b) in the container (60) and a drive unit (90) as a separate unit, said drive unit (90) having an internal electric motor (91) and a rotating output in the form of a first coupling (92), wherein the lid device (10) comprises:
a gear box housing (30) provided on the lid (20) with an opening (23) for reaching the drive shaft (70a, 70b); and
the gearbox (50) being a separate component that is removeably received by the gear box housing (30) and having a second coupling (59) in which the drive shaft (70a, 70b) can be attached, **characterized in that** said gear box (50) comprises a retractable blockage means (53) that is adapted to close said opening (23) wherein said gear box housing (30) has a triggering means (22) that is arranged to retract said blockage means (53) to open said opening (23) when the gear box (50) is mounted to the gear box housing (30) of the lid (20).

2. The lid device (10) according to claim 1, wherein the retractable blockage means (53) is a spring-biased member that is arranged to move on a bottom surface of the gear box housing (42).

3. The lid device (10) according to claim 2, wherein said gear box (50) has a hollow channel (62) formed on a lower part (52) of the gear box (50) to reach said retractable blockage means (53) wherein said hollow channel (62) is shaped and dimensioned with respect to the triggering means (22).

4. The lid device (10) according to claim 3, wherein said triggering means (22) formed as a protrusion is arranged to pass through the hollow channel (62) and retract the blockage means (53) by moving with an engagement channel (65) of the blockage means (53).

5. The lid device (10) according to any one of the preceding claims, wherein the blockage means (53) has a spring housing (66) in the form of a closed region, a spring (67) provided in said spring housing (66) to keep the blockage means (53) in a closed position.

6. The lid device (10) according to any one of the preceding claims, wherein the gear box (50) comprises an upper part (51) having a circumferential collar (49) in which the first coupling (92) of the drive unit (90) is attached; a lower part (52) with a hollow channel (62) to interact with the blockage means (53) and with the second coupling (59) in which a drive shaft tip (77) of the drive shaft (70a, 70b) is attached, and an intermediate part (54) provided between said upper and lower parts (51, 52) wherein said intermediate part (54) has a guiding portion (57) facing to the lower part (52) and a hole (56) at the end of said guiding portion (57) which is shaped and dimensioned with respect to the opening (23) in the gear box housing (30) in which the blockage means (53) is guided.

7. The lid device (10) according to any one of the preceding claims, wherein the triggering means (22) has a substantially triangle cross-section with an inclined wall (25) which is inclined with respect to a bottom surface of the gear box housing (30), said inclined wall being configured arranged to be in touch with a lower wall of the blockage means (53) when mounting.

8. The lid device (10) according to claim 6, wherein the first coupling and the second coupling (92, 59) have different coupling configurations.

9. The lid device (10) according to claim 6, wherein the circumferential collar (49) is adapted to engage or couple with the drive unit (90) wherein said drive unit (90) is a hand held or a stick mixer.

10. The lid device (10) according to any one of the preceding claims, wherein the gear box (50) has a separate connection member (55) with an outwardly extending lip (48) which is shaped and dimensioned with respect to an engagement groove (47).

11. The lid device (10) according to claim 10, wherein said separate connection member (55) is spring biased and the engagement groove is formed on a feed tube of the lid (20).

12. The lid device (10) according to any one of the preceding claims, wherein the blockage means (53) has a bulge portion (69) which is arranged to match with a corresponding cavity (68) in the triggering means (22) when the gear box (50) is mounted to the gear box housing (30) of the lid (20).

13. The lid device (10) according to claim 1, wherein said blockage means (53) has an extended portion that acts as a resilient means arranged to abut on an inner wall of the gear box (50) when the gear box (50) is mounted.

14. A food processor, comprising: the lid device (10) of any one of preceding claims, a drive unit (90) having an internal electric motor (91) and a rotating output in the form of a first coupling (92), the drive unit (90) mounted in the gear box (50), and a container (60) having a drive shaft (70a, 70b) inside.

15. The lid device (10) according to claim 1, wherein the blockage means (53) is arranged to move around opening (23) in the gear box housing (30).

## Patentansprüche

1. Deckelvorrichtung (10) mit einem Deckel (20) und einem Getriebekasten (50), zur Verwendung mit einem Behälter (60) einer Küchenmaschine (100) mit einer Antriebswelle (70a, 70b) in dem Behälter (60) und einer Antriebseinheit (90) als eine separate Einheit, wobei die Antriebseinheit (90) einen internen elektrischen Motor (91) und einen drehenden Ausgang in der Form einer ersten Kupplung (92) aufweist, wobei die Deckelvorrichtung (10) aufweist:
ein Getriebekastengehäuse (30), das sich an dem Deckel (20) mit einer Öffnung (23), um die Antriebswelle (70a, 70b) zu erreichen, befindet; und
wobei der Getriebekasten (50) eine separate Komponente ist, die abnehmbar von dem Getriebekastengehäuse (30) aufgenommen ist und eine zweite Kupplung (59) aufweist, in der die Antriebswelle (70a, 70b) angebracht werden kann, **dadurch gekennzeichnet, dass** der Getriebekasten (50) eine zurückziehbare Blockiereinrichtung (53) aufweist, die darauf ausgelegt ist, die Öffnung (23) zu schließen, wobei das Getriebekastengehäuse (30) eine Auslöseeinrichtung (22) aufweist, die so angeordnet ist, dass sie die Blockiereinrichtung (53) zurückzieht, um die Öffnung (23) zu öffnen, wenn der Getriebekasten (50) an dem Getriebekastengehäuse (30) des Deckels (20) befestigt ist.

2. Deckelvorrichtung (10) nach Anspruch 1, wobei die zurückziehbare Blockiereinrichtung (53) ein federvorgespanntes Element ist, das so angeordnet ist, dass es sich auf einer Bodenfläche des Getriebekastengehäuses (42) bewegt.

3. Deckelvorrichtung (10) nach Anspruch 2, wobei der Getriebekasten (50) einen hohlen Kanal (62) aufweist, der auf einem unteren Teil (52) des Getriebekastens (50) ausgebildet ist, um die zurückziehbare Blockiereinrichtung (53) zu erreichen, wobei der hohle Kanal (62) in bezug auf die Auslöseeinrichtung (22) geformt und dimensioniert ist.

4. Deckelvorrichtung (10) nach Anspruch 3, wobei die Auslöseeinrichtung (22), die als ein Vorsprung ausgebildet ist, so angeordnet ist, dass sie durch den hohlen Kanal (62) hindurch verläuft und die Blockiereinrichtung (53) durch eine Bewegung mit einem Eingriffskanal (65) der Blockiereinrichtung (53) zurückzieht.

5. Deckelvorrichtung (10) nach einem der vorgenannten Ansprüche, wobei die Blockiereinrichtung (53) ein Federgehäuse (66) in der Form eines geschlossenen Bereichs aufweist, wobei sich in dem Federgehäuse (66) eine Feder (67) befindet, um die Blockiereinrichtung (53) in einer geschlossenen Position zu halten.

6. Deckelvorrichtung (10) nach einem der vorgenannten Ansprüche, wobei der Getriebekasten (50) einen oberen Teil (51) mit einem umlaufenden Kragen (49), in dem die erste Kupplung (92) der Antriebseinheit (90) befestigt ist; einen unteren Teil (52) mit einem hohlen Kanal (62), um mit der Blockiereinrichtung (53) und mit der zweiten Kupplung (59), in der eine Antriebswellenspitze (77) der Antriebswelle (70a, 70b) befestigt ist, zu interagieren, und einen Zwischenteil (54), der sich zwischen dem oberen und dem unteren Teil (51, 52) befindet, aufweist, wobei der Zwischenteil (54) einen Führungsabschnitt (57), der dem unteren Teil (52) zugewandt ist, und ein Loch (56) an dem Ende des Führungsabschnitts (57), das in Bezug auf die Öffnung in dem Getriebekastengehäuse (30), in dem die Blockiereinrichtung (53) geführt ist, geformt und dimensioniert ist, aufweist.

7. Deckelvorrichtung (10) nach einem der vorgenannten Ansprüche, wobei die Auslöseeinrichtung (22) einen im Wesentlichen dreieckigen Querschnitt mit einer geneigten Wand (25), die in Bezug auf eine Bodenfläche des Getriebekastengehäuses (30) geneigt ist, aufweist, wobei die geneigte Wand so konfiguriert ist, dass sie so angeordnet ist, dass sie eine untere Wand der Blockiereinrichtung (53) während des Montierens berührt.

8. Deckelvorrichtung (10) nach Anspruch 6, wobei die erste Kupplung und die zweite Kupplung (92, 59) unterschiedliche Kupplungskonfigurationen haben.

9. Deckelvorrichtung (10) nach Anspruch 6, wobei der umlaufende Kragen (49) darauf ausgelegt ist, mit der Antriebseinheit (90) ineinander zu greifen oder sich mit ihr zu koppeln, wobei die Antriebseinheit (90) ein Hand- oder Stabmixer ist.

10. Deckelvorrichtung (10) nach einem der vorgenannten Ansprüche, wobei der Getriebekasten (50) ein separates Verbindungselement (55) mit einer nach außen verlaufenden Lippe (48), die in bezug auf eine Eingriffsnut (47) geformt und dimensioniert ist, aufweist.

11. Deckelvorrichtung (10) nach Anspruch 10, wobei das separate Verbindungselement (55) federvorgespannt ist und die Eingriffsnut an einer Zuführröhre des Deckels (20) gebildet ist.

12. Deckelvorrichtung (10) nach einem der vorgenannten Ansprüche, wobei die Blockiereinrichtung (53) einen Wölbungsabschnitt (69) aufweist, der so angeordnet ist, dass er zu einer entsprechenden Höhlung (68) in der Auslöseeinrichtung (22) passt, wenn der Getriebekasten (50) an dem Getriebekastengehäuse (30) des Deckels (20) befestigt ist.

13. Deckelvorrichtung (10) nach Anspruch 1, wobei die Blockiereinrichtung (53) einen verlängerten Abschnitt aufweist, der als eine belastbare Einrichtung dient, die so angeordnet ist, dass sie an eine Innenwand des Getriebekastens (50) anstößt, wenn der Getriebekasten (50) befestigt ist.

14. Küchenmaschine, aufweisend: die Deckelvorrichtung (10) nach einem der vorgenannten Ansprüche, eine Antriebseinheit (90) mit einem internen elektrischen Motor (91) und einem drehenden Ausgang in der Form einer ersten Kupplung (92), wobei die Antriebseinheit (90) in dem Getriebekasten (50) befestigt ist, und einen Behälter (60) mit einer Antriebswelle (70a, 70b) darin.

15. Deckelvorrichtung (10) nach Anspruch 1, wobei die Blockiereinrichtung (53) so angeordnet ist, dass sie sich um die Öffnung (23) in dem Getriebekastengehäuse (30) herum bewegt.

## Revendications

1. Dispositif de couvercle (10) ayant un couvercle (20) et une boîte d'engrenages (50), destiné à être utilisé avec un récipient (60) d'un robot de cuisine (100) ayant un arbre d'entraînement (70a, 70b) dans le récipient (60) et une unité d'entraînement (90) en tant qu'unité séparée, ladite unité d'entraînement (90) ayant un moteur électrique interne (91) et une sortie rotative sous la forme d'un premier couplage (92), dans lequel le dispositif de couvercle (10) comprend :
un logement de boîte d'engrenages (30) disposé sur le couvercle (20) avec une ouverture (23) pour atteindre l'arbre d'entraînement (70a, 70b) ; et
la boîte d'engrenages (50) étant un composant séparé qui est reçu de manière amovible par le logement de boîte d'engrenages (30) et ayant un second couplage (59) dans lequel l'arbre d'entraînement (70a, 70b) peut être attaché, **caractérisé par le fait que** ladite boîte d'engrenages (50) comprend un moyen de blocage rétractable (53) qui est apte à fermer ladite ouverture (23), ledit logement de boîte d'engrenages (30) ayant un moyen de déclenchement (22) qui est agencé pour rétracter ledit moyen de blocage (53) pour ouvrir ladite ouverture (23) lorsque la boîte d'engrenages (50) est montée sur le logement de boîte d'engrenages (30) du couvercle (20).

2. Dispositif de couvercle (10) selon la revendication 1, dans lequel le moyen de blocage rétractable (53) est un élément sollicité par ressort qui est agencé pour se déplacer sur une surface inférieure du logement de boîte d'engrenages (42).

3. Dispositif de couvercle (10) selon la revendication 2, dans lequel ladite boîte d'engrenages (50) a un canal creux (62) formé sur une partie inférieure (52) de la boîte d'engrenages (50) pour atteindre ledit moyen de blocage rétractable (53), ledit canal creux (62) étant façonné et dimensionné par rapport au moyen de déclenchement (22).

4. Dispositif de couvercle (10) selon la revendication 3, dans lequel ledit moyen de déclenchement (22) formé en tant que saillie est agencé pour passer à travers le canal creux (62) et rétracter le moyen de blocage (53) par déplacement avec un canal d'engagement (65) du moyen de blocage (53).

5. Dispositif de couvercle (10) selon l'une quelconque des revendications précédentes, dans lequel le moyen de blocage (53) a un logement de ressort (66) sous la forme d'une région fermée, un ressort (67) étant disposé dans ledit logement de ressort (66) pour maintenir le moyen de blocage (53) dans une position fermée.

6. Dispositif de couvercle (10) selon l'une quelconque des revendications précédentes, dans lequel la boîte d'engrenages (50) comprend une partie supérieure (51) ayant un collier périphérique (49) dans lequel le premier couplage (92) de l'unité d'entraînement (90) est fixé ; une partie inférieure (52) avec un canal creux (62) pour interagir avec le moyen de blocage (53) et avec le second couplage (59) dans lequel une extrémité d'arbre d'entraînement (77) de l'arbre d'entraînement (70a, 70b) est attachée, et une partie intermédiaire (54) disposée entre lesdites parties supérieure et inférieure (51, 52), ladite partie intermédiaire (54) ayant une partie de guidage (57) faisant face à la partie inférieure (52) et un trou (56) à l'extrémité de ladite partie de guidage (57) qui est façonné et dimensionné par rapport à l'ouverture (23) dans le logement de boîte d'engrenages (30) dans lequel le moyen de blocage (53) est guidé.

7. Dispositif de couvercle (10) selon l'une quelconque des revendications précédentes, dans lequel le moyen de déclenchement (22) a une section transversale sensiblement triangulaire avec une paroi inclinée (25) qui est inclinée par rapport à une surface inférieure du logement de boîte d'engrenages (30), ladite paroi inclinée étant configurée agencée pour être en contact avec une paroi inférieure du moyen de blocage (53) lors du montage.

8. Dispositif de couvercle (10) selon la revendication 6, dans lequel le premier couplage et le second couplage (92, 59) ont des configurations de couplage différentes.

9. Dispositif de couvercle (10) selon la revendication 6, dans lequel le collier périphérique (49) est apte à s'engager ou se coupler avec l'unité d'entraînement (90), ladite unité d'entraînement (90) étant un mixeur manuel ou un mélangeur plongeant.

10. Dispositif de couvercle (10) selon l'une quelconque des revendications précédentes, dans lequel la boîte d'engrenages (50) a un élément de liaison séparé (55) avec une lèvre (48) s'étendant vers l'extérieur qui est façonnée et dimensionnée par rapport à une rainure d'engagement (47).

11. Dispositif de couvercle (10) selon la revendication 10, dans lequel ledit élément de liaison séparé (55) est sollicité par ressort et la rainure d'engagement est formée sur un tube d'alimentation du couvercle (20).

12. Dispositif de couvercle (10) selon l'une quelconque des revendications précédentes, dans lequel le moyen de blocage (53) a une partie renflée (69) qui est agencée pour s'apparier avec une cavité correspondante (68) dans le moyen de déclenchement (22) lorsque la boîte d'engrenages (50) est montée sur le logement de boîte d'engrenages (30) du couvercle (20).

13. Dispositif de couvercle (10) selon la revendication 1, dans lequel ledit moyen de blocage (53) a une partie étendue qui agit comme moyen élastique agencé pour venir en butée sur une paroi interne de la boîte d'engrenages (50) lorsque la boîte d'engrenages (50) est montée.

14. Robot de cuisine, comprenant : le dispositif de couvercle (10) selon l'une quelconque des revendications précédentes, une unité d'entraînement (90) ayant un moteur électrique interne (91) et une sortie rotative sous la forme d'un premier couplage (92), l'unité d'entraînement (90) étant montée dans la boîte d'engrenages (50), et un récipient (60) ayant un arbre d'entraînement (70a, 70b) à l'intérieur.

15. Dispositif de couvercle (10) selon la revendication 1, dans lequel le moyen de blocage (53) est agencé pour se déplacer autour de l'ouverture (23) dans le logement de boîte d'engrenages (30).
